# EUROPEAN PATENT SPECIFICATION

(11) **EP 3 084 238 B1**
(45) Date of publication and mention of the grant of the patent: **30.01.2019**
(21) Application number: 14872168.1
(22) Date of filing: 03.12.2014
(51) Int. Cl.: F16C 3/08, B21K 1/08

(54) **CRANKSHAFT AND METHOD FOR MANUFACTURING A CRANKSHAFT**
KURBELWELLE UND VERFAHREN ZUR HERSTELLUNG EINER KURBELWELLE
VILEBREQUIN ET PROCÉDÉ DE FABRICATION DE VILEBREQUIN

(30) Priority: 20.12.2013 SE 1351559
(43) Date of publication of application: 26.10.2016
(73) Proprietor: Scania CV AB, 151 87 Södertälje (SE)
(72) Inventor: LARSÉN, Per, 152 57 Södertälje (SE)
(74) Representative: Scania CV AB
(86) International application number: PCT/SE2014/051443
(87) International publication number: WO 2015/094085

(56) References cited:
- EP-A1- 1 724 475
- EP-A1- 2 565 473
- WO-A1-03/016730
- DE-A1-102008 046 821
- DE-A1-102013 010 747
- FR-A- 981 221
- JP-A- S62 252 680
- US-A- 1 518 610
- US-A- 1 518 610
- US-A1- 2004 025 339

## Description

### FIELD OF TECHNOLOGY

The present invention relates to a crankshaft, a combustion engine comprising such a crankshaft and a vehicle comprising such a combustion engine.

### BACKGROUND OF THE INVENTION AND PRIOR ART

A piston engine, such as a combustion engine, comprises a crankshaft which transforms the forward and backward movement of one or several pistons, and hence the crank rods in the engine, to a rotating movement of the crankshaft or vice versa. The crankshaft comprises one or several crankshaft webs, each of which is connected to at least one crank rod in a cylinder in the engine. For example, a six-cylinder piston engine may thus have a crankshaft with six crankshaft webs. Each crankshaft web comprises two crank discs, which are connected with each other via a crankpin. The piston is connected to the crankpin via the crank rod. Each crankpin has a connecting rod bearing, such as a slide bearing, at which the crank rod rotates. Between each crankshaft web the crankshaft has main bearing journals, which are arranged coaxially with the crankshaft's central axis, around which the crankshaft rotates. The main bearing journals have main bearings arranged in connection with the crank house, in which the crankshaft is arranged. The crankshaft rotates at the mean bearings, which thus absorb the forces arising between the crankshaft and the crank house. Usually, there is a main bearing journal comprising a main bearing at each end of the crankshaft, and one between each crankshaft web.

In order to e.g. reduce fuel consumption efforts are currently made to minimise the weight of vehicles. Accordingly, it is also desirable to manufacture engines that are as light as possible. Different ways of reducing the weight of an engine by reducing the weight of the crankshaft have been proposed in prior art.

Document US20120024105 A1 describes a method for manufacture of a light crankshaft, wherein the crankshaft is adapted with a recesses and holes in its crankpins. This method is time-consuming, however, since holes and recesses are obtained by way of forging and stamping. Similarly, document DE4325722 A1 describes how a crankshaft is adapted with recesses in its crankpins, with the objective of reducing its weight. Documents EP2565473 A1 and WO03/016730 A1 describe leight weight crankshafts with holes in the crankpins and protrusions on the crank discs according to the preamble of claim 1.

### SUMMARY OF THE INVENTION

Despite prior art solutions in this field, there remains a need to further develop a light crankshaft and a method for manufacture of a light crankshaft that is simple and cost effective.

One objective of the present invention is to achieve a crankshaft with a reduced weight.

Another objective of the present invention is to achieve a crankshaft with a good flexural and torsional strength.

Another objective of the present invention is to achieve a crankshaft which facilitates drilling of holes through the crankshaft.

These objectives are achieved with a crankshaft according to claim 1. These objectives are also achieved with a combustion engine comprising such a crankshaft according to claim 3 and with a vehicle comprising such a combustion engine according to claim 4.

According to one aspect of the present invention, a crankshaft with a central axis is provided, wherein the crankshaft comprises at least two main bearing journals through which the central axis extends, and at least one crankshaft web arranged between the main bearing journals, wherein the at least one crankshaft web comprises two crank discs connected with each other through a crankpin, wherein at least one crank disc has a protrusion, wherein a hole extends, substantially coaxially with the central axis, through the protrusion, the at least one crank disc and through at least one main bearing journal. According to the present invention, the protrusion is adapted like a bridge extending in the direction of the central axis, from the at least one crank disc to the second crank disc of the crankshaft web of the at least one crank disc. The hole, which is substantially coaxial with the central axis, suitably extends through the entire bridge.

Preferably, all crankshaft webs in the crankshaft have a protrusion in the form of a bridge, and a hole which extends substantially coaxially with the central axis through the bridge.

The extension of the protrusion is preferably in the direction of the central axis. The protrusion in the at least one crank disc is also suitably adapted in such a way that the central shaft cuts through the protrusion.

Prior art currently provides for adapting holes and recesses of crankshafts to reduce the crankshaft's weight, e.g. by drilling holes in the crankpins. Holes adapted in details, with the objective of reducing the weight of the details, are called light holes. By adapting the at least one crank disc and at least one main bearing journal with a hole extending substantially coaxially with the central axis, the crankshaft's weight is reduced. Since the hole is adapted coaxially with the central shaft in the at least one crank disc and the at least one main bearing journal, the hole does not impact the balancing of the crankshaft. This ensures that no imbalance arises as a result of the hole and similar holes may thus be adapted in as many or as few main bearing journals and/or crank discs as is desired.

Preferably, several main bearing journals or all main bearing journals of the crankshaft have a hole substantially coaxial with the central axis. Preferably, several crank discs or all crank discs of the crankshaft have a hole substantially coaxial with the central axis. Thus, a light crankshaft is achieved, entailing that the weight of the vehicle in which the combustion engine with said crankshaft is arranged is reduced. Thus the vehicle's fuel consumption is reduced.

Preferably, the crankshaft comprises six crankshaft webs. The crankshaft thus suitably comprises seven main bearing journals, whereat one main bearing journal is arranged at each end of the crankshaft and one main bearing journal is arranged between each crankshaft web. The crankshaft is preferably adapted for an engine with six cylinders. All twelve crank discs and seven main bearing journals suitably have holes extending coaxially with the central axis.

The crankshaft may be adapted for a straight engine with three, four, five or six cylinders and thus comprises three, four, five or six crankshaft webs. Alternatively, the crankshaft may be adapted to a so-called V engine with six, eight, or twelve cylinders, and accordingly comprises three, four, or six crankshaft webs.

Preferably, at least one main bearing journal of the crankshaft comprises an oil conduit hole for oil supply. The oil conduit hole is suitably connected with the crankpin of a crankshaft web arranged next to the at least one main bearing journal. The hole made in the at least one main bearing journal coaxially with the central axis is preferably adapted in such a way that it is separated from the oil conduit hole.

Preferably, at last one crank disc in the crankshaft has a counterweight. Holes may be drilled in the counterweight to balance the crankshaft. Suitably, several crank discs have a counterweight.

Preferably, the crankpin of the at least one crankshaft web has a connecting rod bearing. Suitably, all the crankpins of the crankshaft have connecting rod bearings. Furthermore, the at least two main bearing journals preferably have main bearings at which the crankshaft rotates around the central axis. Suitably, all main bearing journals of the crankshaft have main bearings.

Suitably, sealing elements are arranged at each end of the crankshaft. When a main bearing journal at the crankshaft end has a hole for weight reduction, dirt may penetrate into the main bearing journal. By arranging a sealing at the end of the crankshaft, the risk of dirt penetrating into the main bearing journal is minimised. Furthermore, the sealing entails that no lubricant leaks out through the crank house through the hole in the main bearing journal.

In cases where it is desirable to drill holes in several or all of the main bearing journals of a crankshaft, it is also necessary to drill through the crankshaft web(s) arranged between each main bearing journal. In such cases, a long drill is required, which thus becomes weak and unstable. Furthermore, drilling through several main bearing journals and at least one crankshaft web means that the drill will not drill through any material between the crankshaft web's crank discs. That is to say, the drill will periodically pass through the space between the crankshaft web's crank discs. The drill is suitably stopped once it has passed through the first crank disc and is in the space between the crank discs, in order to be started again when it is in engagement with the next crank disc. These interruptions entail that some types of drills may not be used. Additionally, the repeated drilling starts shorten the life of the drill and may cause the hole to become askew. Forming a bridge extending the whole way between both crank discs at the forging, ensures that the drill, while drilling holes, drills constantly through homogeneous materials. The problems caused by the drill passing through air in the space between the crank discs are thus avoided. According to this aspect of the present invention, the drilling of holes through main bearing journals and crank discs is facilitated by forming a bridge at forging, which is simple, time-efficient and cost effective is thus achieved. Furthermore, the bridge entails that both straighter and larger holes may be achieved, compared to the holes that may be achieved without the bridge. By forging the crankshaft in one piece and forming the bridge at the forging, a crankshaft with good strength is achieved.

Preferably, protrusions/bridges are formed in several crank discs of the crankshaft, so that drilling is suitably carried out through several main bearing journals and crank discs.

The crankshaft according to the present invention may be arranged in a detached engine, such as one used as an industrial engine, in engine-powered industrial robots or in different types of power plants, such as an electric power plant comprising a diesel generator.

Additional objectives, advantages and novel features of the present invention will be apparent to one skilled in the art from the following details, and through exercising the invention. While the invention is described below, it should be apparent that the invention is not limited to the specifically described details. One skilled in the art, having access to the teachings herein, will recognise additional applications, modifications and incorporations in other areas, which are within the scope of the invention.

### BRIEF DESCRIPTION OF THE DRAWINGS

Below is a description, as an example, of preferred embodiments of the invention with reference to the enclosed drawings, in which:
- Fig. 1: shows a schematic side view of a vehicle;
- Fig. 2a: schematically shows a crankshaft according to one embodiment of the present invention;
- Fig. 2b: schematically shows a section of a crankshaft according to one embodiment of the present invention;
- Fig. 3a: schematically shows a crankshaft;
- Fig. 3b: schematically shows a section of the crankshaft in fig. 3a;
- Fig. 4a: schematically shows a crankshaft forging tool for achieving a crankshaft;
- Fig. 4b: schematically shows a crankshaft mould for achieving a crank-shaft;
- Fig. 5a: shows a flow chart for a method for manufacture of a crankshaft; and
- Fig. 5b: shows a flow chart for a method for manufacturing a crankshaft.

### DETAILED DESCRIPTION OF THE INVENTION.

For the sake of clarity, certain reference numerals have been omitted from the drawings, regarding details displayed several times in one and the same figure, and/or in several different figures.

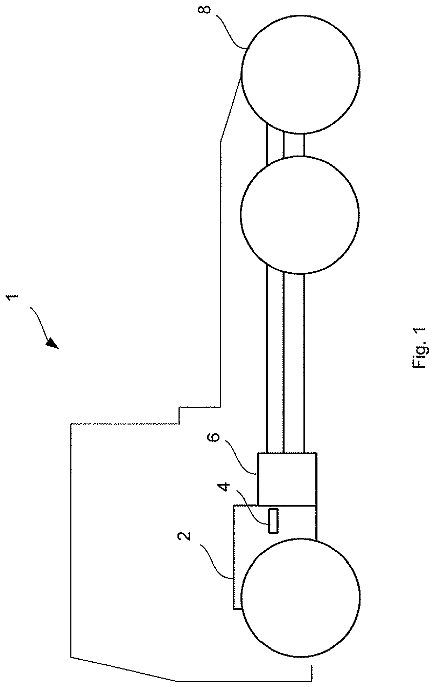

Figure 1 shows a schematic side view of a vehicle 1. The vehicle 1 comprises a combustion engine 2, which comprises a crankshaft according to the present invention. The combustion engine 2 is connected to a gearbox via the crankshaft, which is further connected to the vehicle's driving wheels via a transmission. The vehicle may be a heavy goods vehicle, such as a truck, a bus, a wheel loader, forestry machine, dumper, mining machine, tracked vehicle or tank. The vehicle may, alternatively, be a car.

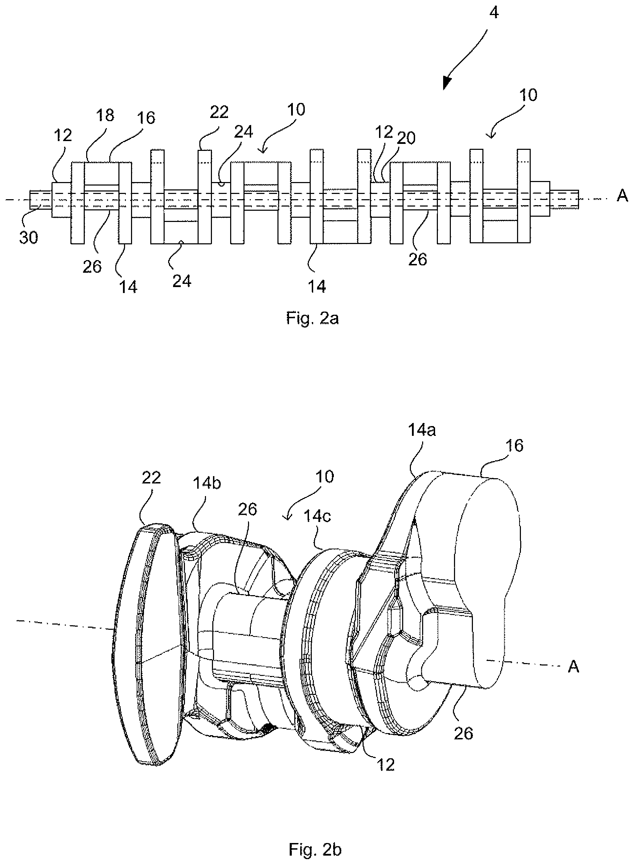

Figure 2a schematically shows a crankshaft 4 according to one embodiment of the present invention. The crankshaft 4 comprises six crankshaft webs 10 arranged next to each other along a central axis A, around which the crankshaft 4 rotates. Two crankshaft webs 10 arranged next to each other may be offset around the central axis A in relation to each other. For example, two crankshaft webs 10 arranged next to each other may be offset 120 degrees around the central axis A in relation to each other. Below, the invention is described in connection with a crankshaft with such an offset between crankshaft webs 10 in relation to each other. The crankshaft 4 has a main bearing journal 12 at each end and a main bearing journal 12 between each crankshaft web 10, the central shaft A extending through the centre of the main bearing journals 12. Each crankshaft web 10 comprises two crank discs 14, which are connected with each other via a crankpin 16. The crankpin 16 in each crankshaft web 10 is parallel and separate from the central axis A. Around each crankpin 16, a connecting rod bearing 18 is arranged in the form of a plain bearing, on which the crank rods (not displayed) of the combustion engine 2 are mounted. Around each main bearing journal 12, a main bearing 20 is arranged, on which the crankshaft 4 is mounted in the engine block (not displayed). The crankshaft webs 10 may comprise crank discs 14 with counterweights 22, in order to counteract imbalance of the crankshaft 4. Furthermore, the crankpins 16 and the main bearing journals 12 have oil conduit holes 24 for supply of oil, and hence lubrication. The crank discs 14 of each crankshaft web 10 have a protrusion 26 in the form of a bridge. The bridge 26 is adapted in such a way that it extends coaxially with the central axis A, between both crank discs 14 of the crankshaft web 10. The protrusion/bridge is described in further detail in Fig. 2b. A hole 30 extends through all main bearing journals 12, crank discs 14 and bridges 26, substantially coaxially with the central axis A.

Figure 2b schematically shows a section of a crankshaft 4 according to one embodiment of the present invention. The figure shows a crank disc 14a without any counterweight 22, and a crankshaft web 10 comprising a crank disc 14b with a counterweight 22 and an opposing second crank disc 14c. The crank disc 14a without counterweight 22 and the crank discs 14b, 14c of the crankshaft web 10 are offset 120 degrees around the central axis A in relation to each other. The crank disc 14a without counterweight 22 has a crankpin 16, which is cut in the figure, and a protrusion 26 in the form of a bridge (cut herein) integrated with the crankpin 16. The crank disc 14a without counterweight is further arranged in connection with the crankshaft web 10 via a main bearing journal 12. A bridge 26 also extends in the direction of the central axis A, between the crank disc 14b with a counterweight 22 and the second crank disc 14c of the crankshaft web 10. The bridges 26 entail that subsequent drilling of holes (not displayed) through several main bearing journals 12 and crank discs 12 is facilitated and made more efficient.

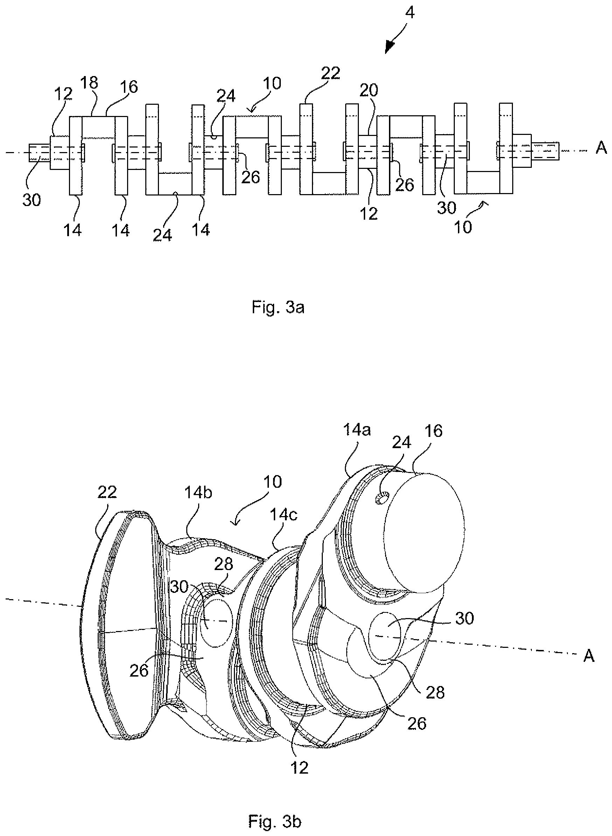

Figure 3a schematically shows a crankshaft 4. The crankshaft 4 comprises six crankshaft webs 10 arranged next to each other along a central axis A, around which the crankshaft 4 rotates. Two crankshaft webs 10, arranged next to each other, may be offset 120 degrees around the central axis A in relation to each other. The crankshaft 4 has a main bearing journal 12 at each end and a main bearing journal 12 between each crankshaft web 10, the central axis A extending through the centre of the main bearing journals 12. Each crankshaft web 10 comprises two crank discs 14, which are connected with each other via a crankpin 16. The crankpin 16 in each crankshaft web 10 is parallel and separate from the central axis A. Around each crankpin 16, a connecting rod bearing 18 is arranged in the form of a plain bearing, on which the crank rods (not displayed) of the combustion engine 2 are mounted. Around each main bearing journal 12, a main bearing 20 is arranged, on which the crankshaft 4 is mounted in the engine block (not displayed). The crankshaft webs 10 may comprise crank discs 14 with counterweights 22, in order to counteract imbalance of the crankshaft 4. Furthermore, the crankpins 16 and the main bearing journals 12 have oil conduit holes 24 for supply of oil, and hence lubrication. The crank discs 14 each have a protrusion 26 with a plane surface 28. The protrusions 26 of the crank discs 14 in a crankshaft web 10 are adapted in such a way that they face each other. That is to say, the protrusions 26 are adapted on that side of a crank disc 14, which faces the other crank disc 14 in the same crankshaft web 10. A hole 30 extends through all main bearing journals 12, crank discs 14 and bridges 26, coaxially with the central axis A.

Figure 3b schematically shows a section of a crankshaft 4. The figure shows a crank disc 14a without any counterweight 22, and a crankshaft web 10 comprising a crank disc 14b with a counterweight 22 as well as an opposing second crank disc 14c. The crank disc 14a without counterweight 22 and the crank discs 14b, 14c of the crankshaft web 10 are offset 120 degrees around the central axis A in relation to each other. The crank disc 14a without counterweight 22 has a crankpin 16, which is cut in the figure, with an oil conduit hole 24. The crank disc 14a without counterweight is also arranged in connection with the crankshaft web 10, via a main bearing journal 12. The crank discs 14a, 14b each have a protrusion 26 with a plane surface 28, which is substantially at a right angle in relation to the direction of the central axis A. The recesses 26 are adapted in the crank discs 14a, 14b in such a way that the central shaft A cuts the plane surface 28 of the protrusion 26. The crank discs 14a, 14b have a hole 30, extending substantially coaxially with the central axis A, through the respective protrusion 26 and through the respective crank disc 14a, 14b. The hole 30 of the crank disc 14a without counterweight 22 extends through the plane surface 28 of the protrusion, through the entire crank disc 14a and further through the main bearing journal 12. The hole 30 is suitably adapted in such a way that its cross-sectional area occupies a part of the plane surface 28 of the respective protrusion 26.

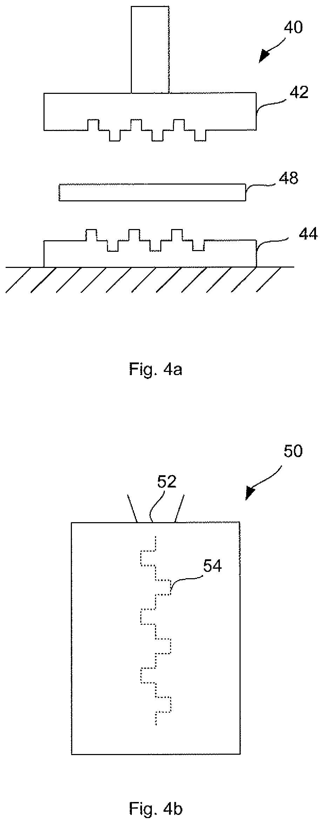

Figure 4a schematically shows a crankshaft forging tool 40 for achieving a crankshaft 4, according to one embodiment of the present invention. The crankshaft forging tool 40 comprises two tool halves 42, 44, one of which tool halves 42, 44 has at least one recess (not displayed). At the manufacture of a crankshaft 4 through forging, the raw material 48, such as forging steel, is placed between the tool halves 42, 44. Subsequently, the tool halves 42, 44 are pressed together and the raw material 48 is shaped according to the design of the tool halves 42, 44. The at least one recess of one of the tool halves 42, 44 is adapted in such a way that it entails a protrusion 26 being achieved in the at least one crank disc 14 of the crankshaft 4. The recess may be adapted in such a way that the formed protrusion 26 has a plane surface 28, substantially at a right angle in relation to the direction of the central axis A of the crankshaft 4, and in such a way that the central axis A cuts the plane surface 28 of the formed protrusion 26. The central axis A will thus form a normal to the plane surface 28 of the recess 26. Alternatively, the recess is adapted in such a way that a protrusion 26 is formed, which, following machining, has a plane surface 28, substantially at a right angle in relation to the direction of the central axis A of the crankshaft 4, so that the central shaft A cuts the plane surface 28. According to the crankshaft of the invention, the recess is adapted in such a way that the protrusion 26 becomes formed like a bridge, extending in the direction of the central axis A, between the at least one crank disc 14 and the second crank disc 14 of the same crankshaft web 10. The recess is suitably adapted in such a way that the formed bridge 26 becomes adapted in such a way that the central axis A extends through the bridge 26, along the direction of the bridge 26.

Figure 4b shows a crankshaft mould 50 for achieving a crankshaft 4 according to one embodiment of the present embodiment. The crankshaft mould 50 comprises an opening 52 and a hollow 54, wherein raw material is supplied to the crankshaft mould via the opening 52, into the hollow 54. The crankshaft mould 50 comprises at least one recess (not displayed) which, at casting, forms a protrusion 26 in at least one crank disc 14 of the crankshaft 4. The recess may be adapted in such a way that the formed protrusion 26 has a plane surface 28 substantially at a right angle in relation to the direction of the central axis A of the crankshaft 4, and in such a way that the central axis A cuts the plane surface 28 of the formed protrusion 26. The central axis A will thus form a normal to the plane surface 28 of the recess 26. According to the crankshaft of the invention, the recess may be adapted in such a way that the protrusion 26 becomes formed like a bridge, extending in the direction of the central axis A, between the at least one crank disc 14 and the second crank disc 14 of the same crankshaft web 10. The recess is suitably adapted in such a way that the formed bridge 26 becomes adapted in such a way that the central axis A extends through the bridge 26, along the direction of the bridge 26.

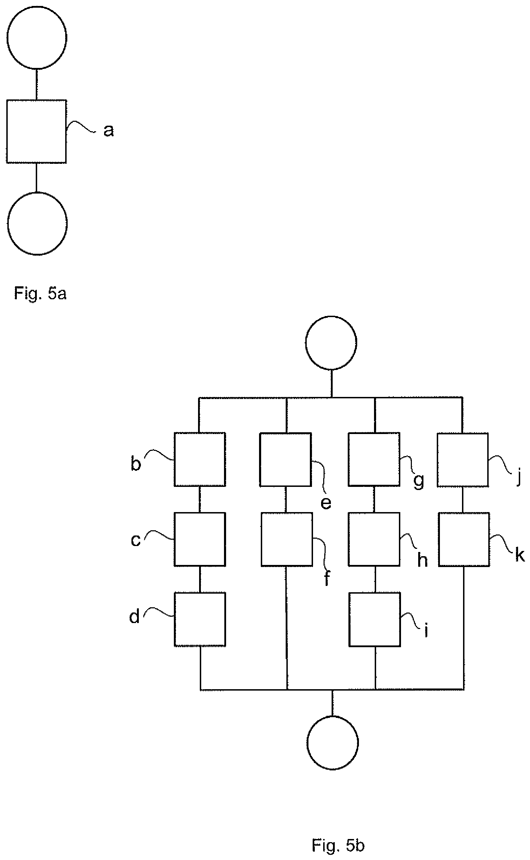

Figure 5a shows a flow chart for a method for manufacture of a crankshaft 4, with a central axis A, wherein the crankshaft 4 comprises at least two main bearing journals 12 through which the central axis A extends, and at least one crankshaft web 10 arranged between the main bearing journals 12, wherein the at least one crankshaft web 10 comprises two crank discs 14 connected with each other through a crankpin 16. The method comprises the step a) of forming the crankshaft 4, so that at least one crank disc 14 has a protrusion 26, and so that a hole 30 extends substantially coaxially with the central axis A through the protrusion 26, the at least one crank disc 14 and trough at least one main bearing journal 12. Preferably, the crankshaft 4 is formed so that all crank discs 14 have a protrusion 26, and so that a hole 30 extends through all crank discs 14 and all main bearing journals 12 of the crankshaft 4. The crankshaft 4 may be formed with different manufacturing methods, of which some examples are described in Fig. 5b.

Figure 5b shows a flow chart for a method for manufacture of a crankshaft 4 in accordance with Fig. 5a.

The method may comprise the step b) of forging the crankshaft 4 with a crankshaft forging tool 40 (see Fig. 4a), so that a protrusion 26 in the form of a bridge is formed, extending in the direction of the central axis A, from the at least one crank disc 14 to the second crank disc 14 of the same crankshaft web 10. Preferably, the crankshaft 4 is forged so that a bridge 26 is formed between all the crank discs 14 of the crankshaft 4. The bridge 26 may be integrated with the crankpin 16 between the crank discs 14 of the crankshaft web 10. Following the method step b), the method step c) of drilling a hole, extending substantially coaxially with the central axis A, through the bridge 26, the at least one crank disc 14 and through the at least one main bearing journal 12, is carried out. A reduction of the weights of the crankshaft 4 is achieved by drilling a hole 30 through the protrusion 26, the at least one crank disc 14 and through the at last one main bearing journal 12. Preferably, holes 30 are drilled through all the bridges 26, crank discs 14 and main bearing journals 12 of the crankshaft 4, wherein the drilling is suitably carried out from both ends of the crankshaft 4. Following the method step c), the method step d) of processing the crankshaft 4 is suitably carried out by removing at least a part of the bridge 26. The crankshaft 4 is suitably processed with machining, wherein a section of the bridge 26 is removed, so that a gap is achieved between the crank discs 14 of the crankshaft web 10, coaxially with the central axis A. That is to say, so that a space between the crank discs 14 is achieved. Preferably, all material which constitutes the bridge 26 is removed, so that the hole 30 only remains in the at least one crank disc 14 and the at least one main bearing journal 12. Accordingly, the bridge 26 does not impact the weight of the, not according to the invention, finished crankshaft 4. The method is completed after method step d).

Alternatively, the method comprises the step e) of forging the crankshaft 4 with a crankshaft forging tool 40 (see Fig. 4a), so that a protrusion 26 with a plane surface 28, substantially at a right angle in relation to the central axis A, is formed in the at least one crank disc 14. The protrusion 26 is suitably adapted in the at least one crank disc 14 in such a way that the central axis A cuts the plane surface 28. Preferably, the crankshaft 4 is forged so that all the crank discs 14 of the crankshaft 4 have a protrusion 26. Following the method step e), the method step f) of drilling a hole 30, extending substantially coaxially with the central axis A, through the protrusion 26, the at least one crank disc 14 and through the at least one main bearing journal 12, is carried out The hole 30 thus extends through the plane surface 28 of the protrusion 26. A reduction of the weight of the crankshaft 4 is achieved by drilling a hole 30 through the protrusion 26, the at least one drank disc 14 and through the at last one main bearing journal 12. Since the recess 26 has a plane surface 28, substantially at a right angle in relation to the central axis A, the risk of the drilled hole 30 becoming skewed is minimised, as is any drill bit wear. Furthermore, the need for finishing is reduced since the occurrence of burrs is minimised. The hole or bore 30 is suitably adapted in such a way that the cross-sectional area occupies a part of the area of the plane surface 28 of the protrusion 26. In this way, a part of the plane surface 28 wholly or partially surrounds the opening of the hole 30. The method is completed after the method step f).

Alternatively, the method comprises the method step g) of forging the crankshaft 4 with a crankshaft forging tool 40 (see Fig. 4a), so that a protrusion 26 is formed in the at least one crank disc 14. The protrusion 26 is suitably adapted in the at least one crank disc 14, in such a way that the central axis A cuts through the protrusion 26. Preferably, the crankshaft 4 is forged so that all the crank discs 14 of the crankshaft 4 have a protrusion 26. Following the method step g), the method step h) of processing the protrusion 26 is carried out, so that it has a plane surface 28, which is substantially at a right angle in relation to the central axis A. Suitably, the protrusion 26 is processed with machining, such as drilling, turning, planning, chiselling, filing and/or milling. Following the method step h), the method step i) of drilling a hole 30, extending substantially coaxially with the central axis A, through the protrusion 26, the at least one crank disc 14 and through the at least one main bearing journal 12, is carried out. The hole 30 thus extends through the plane surface 28 of the protrusion 26. The method is completed after the method step i).

Alternatively, the method comprises the step j) of casting the crankshaft 4 with a crankshaft mould 50 (see Fig. 4b), so that a protrusion 26 with a plane surface 28, which is substantially at a right angle in relation to the central axis A, is formed in the at least one crank disc 14. Preferably, the crankshaft 4 is cast so that all the crank discs 14 of the crankshaft 4 have a protrusion 26. Following the method step j), the method step k) of drilling a hole 30, extending substantially coaxially with the central axis A, through the protrusion 26, the at least one crank disc 14 and through the at least one main bearing journal 12, is carried out. The hole 30 thus extends through the plane surface 28 of the protrusion 26. The method is completed after the method step k).

The foregoing description of the preferred embodiments of the present invention has been furnished for illustrative and descriptive purposes. It is not intended to be exhaustive, or to limit the invention to the variants described. Many modifications and variations will obviously be apparent to one skilled in the art. The embodiments have been chosen and described in order to best explicate the principles of the invention and its practical applications, and to thereby enable one skilled in the art to understand the invention in terms of its various embodiments and with the various modifications that are applicable to its intended use. The components and features specified above may, within the scope of the appended claims, be combined between different embodiments specified. The invention is defined by the appended claims only.

## Claims

1. Crankshaft (4) with a central axis (A), wherein the crankshaft (4) comprises at least two main bearing journals (12), through which the central axis (A) extends, and at least one crankshaft web (10) arranged between the main bearing journals (12), wherein the at least one crankshaft web (10) comprises two crank discs (14, 14a, 14b, 14c) connected with each other through a crankpin (16), wherein at least one crank disc (14, 14a, 14b, 14c) has a protrusion (26), wherein a hole (30) extends substantially coaxially with the central axis (A) through the protrusion (26), the at least one crank disc (14, 14a, 14b, 14c) and through at least one main bearing journal (12), **characterised in that** the protrusion (26) is formed like a bridge, extending in the direction of the central axis (A) from the at least one crank disc (14, 14a, 14b, 14c) to the other crank disc (14, 14a, 14b, 14c) of the same crankshaft web (10).

2. Crankshaft according to claim 1, wherein the crankshaft (4) comprises six crankshaft webs (10).

3. Combustion engine (2) comprising a crankshaft (4) according to any of claims 1-2.

4. Vehicle (1) comprising a combustion engine (2) according to claim 3.

## Patentansprüche

1. Kurbelwelle (4) mit einer Mittelachse (A), wobei die Kurbelwelle (4) zumindest zwei Hauptlagerzapfen (12), durch welche hindurch sich die Mittelachse (8) erstreckt, und zumindest eine Kurbelwellenwange (10) umfasst, die zwischen den zwei Hauptlagerzapfen (12) angeordnet ist, wobei die zumindest eine Kurbelwellenwange (10) zwei Kurbelscheiben (14, 14 a, 14 b, 14 c) umfasst, die durch einen Kurbelzapfen (16) miteinander verbunden sind, wobei zumindest eine Kurbelscheibe (14, 14a, 14b, 14c) einen vorstehenden Teil (26) aufweist, wobei ein Loch (30) sich im Wesentlichen koaxial mit der Mittelachse (A) durch den vorstehenden Teil (26), durch die zumindest eine Kurbelscheibe (14, 14a, 14b, 14c) und durch zumindest einen Hauptlagerzapfen (12) hindurch erstreckt, **dadurch gekennzeichnet, dass** der vorstehende Teil (26) wie eine Brücke geformt ist, die sich in die Richtung der Mittelachse (A) von der zumindest einen Kurbelscheibe (14, 14a, 14b, 14c) zu der anderen Kurbelscheibe (14, 14a, 14b, 14c) derselben Kurbelwellenwange (10) erstreckt.

2. Kurbelwelle gemäß Anspruch 1, wobei die Kurbelwelle (4) sechs Kurbelwellenwangen (10) umfasst.

3. Verbrennungsmotor (2), umfassend eine Kurbelwelle (4) gemäß einem der Ansprüche 1 bis 2.

4. Fahrzeug (1), umfassend einen Verbrennungsmotor (2) gemäß Anspruch 3.

## Revendications

1. Vilebrequin (4) avec un axe central (A), dans lequel le vilebrequin (4) comprend au moins deux pivots de palier principaux (12), à travers lesquels s'étend l'axe central (A), et au moins un bras de vilebrequin (10) disposé entre les pivots de palier principaux (12), dans lequel le bras de vilebrequin (10) au nombre d'au moins un comprend deux manivelles de vilebrequin (14, 14a, 14b, 14c) reliées l'une à l'autre par l'intermédiaire d'un tourillon (16), au moins l'une des manivelles de vilebrequin (14, 14a, 14b, 14c) comporte une saillie (26), dans lequel un trou (30) s'étend de façon sensiblement coaxiale à l'axe central (A) à travers la saillie (26), la manivelle de vilebrequin au nombre d'au moins une (14, 14a, 14b, 14c), et à travers au moins un pivot de palier principal (12), **caractérisé en ce que** la saillie (26) est formée à la façon d'un pont, s'étendant dans la direction de l'axe central (A) de la manivelle de vilebrequin au nombre d'au moins une (14, 14a, 14b, 14c) à l'autre manivelle de vilebrequin (14, 14a, 14b, 14c) du même bras de vilebrequin (10).

2. Vilebrequin selon la revendication 1, dans lequel le vilebrequin (4) comprend six bras de vilebrequin (10).

3. Moteur à combustion (2) comprenant un vilebrequin (4) selon l'une quelconque des revendications 1 à 2.

4. Véhicule (1) comprenant un moteur à combustion (2) selon la revendication 3.
